# EUROPEAN PATENT APPLICATION

(11) **EP 1 215 596 A2**
(43) Date of publication of application: **19.06.2002**
(21) Application number: 01310378.3
(22) Date of filing: 12.12.2001
(51) Int. Cl.: G06F 17/30

(54) **Information collection server with content conversion and synchronization for mobile clients**

(30) Priority: 18.12.2000 JP 2000383009
(71) Applicant: Kizna Corporation, Delaware 19801 (US)
(72) Inventor: Miyazawa, Takeo, Mitaka-shi, Tokyo 181-0013 (JP)
(74) Representative: Brown, Kenneth Richard

(57) **Abstract**

The present invention allows a mobile terminal to access arbitrary Internet contents and acquire necessary information in a simple, reliable and timely manner. The present invention comprises a collection conditions memory that pre-stores the conditions for collecting contents, an information collection portion that accesses servers and collects contents based on said collection conditions and distributes the collected contents to a mobile terminal, and a conversion portion that converts the collected contents into a format for said mobile terminal. The information collection portion includes a synchronization portion for synchronizing contents between itself and said mobile terminal.

## Description

### BACKGROUND OF THE INVENTION

### Field of the Invention

The present invention relates to an information collection server that collects desired information from servers connected via a communication network and sends prescribed information to a mobile terminal, and further to the method of collecting such information, and a recording medium.

### Description of the Related Art

Recently, mobile telephones having Internet access function have appeared, and they are becoming increasingly popular. In the description below, this type of telephone will be referred to as an "Internet mobile telephone."

Now, the Internet mobile telephone will be briefly explained below. Using it, people are not only able to make voice communication as with conventional mobile telephones - they can also make a balance inquiry or a transfer from a bank account, look in a restaurant guide or telephone book, and utilize other online services that are useful in everyday life. Using only the mobile telephone, sending and receiving electronic mail via the Internet is possible, in addition to viewing home pages adapted to Internet mobile telephones.

The major characteristics are as follows.
- In addition to voice communication, access to a number of public Internet sites is possible by one key touch on the Internet mobile telephone. Services provided via the Internet mobile telephone are continuously expanding, mainly focused on everyday, useful services such as mobile banking, ticket reservations, news flashes, and restaurant guides.
- The data communication method used by Internet mobile telephones is the packet communication method (9600 bps), and users are charged according to the amount of data sent or received, not the communication time. Therefore, the user can take time in viewing the required information without worrying about the communication time.
- Mail exchange is not only possible between Internet mobile telephones, but also via the Internet, allowing users to send and receive Internet mails from outdoors. Furthermore, because packet communication is used, exchange of short mails will cost only around one to three Japanese Yen.

The screen of the Internet mobile telephone corresponds to a small-sized personal computer screen. Therefore, the user can connect to the Internet and various information service providers to view the desired information regardless of time and place.

The main services provided via the Internet mobile telephone are as follows.
- Internet mobile telephone messaging service
   When the user applies for message reception at a site that provides Internet mobile telephone messaging services, the desired information automatically reaches the mobile telephone. News flashes, weather forecasts and other information services can be received without considering the communication time.
- Internet mobile telephone mail service
   Mail exchange is possible not only between Internet mobile telephones, but also via the Internet. Using the Internet mobile telephone, the contracted mobile telephone number becomes the e-mail address.
- Internet mobile telephone Internet browsing
   Using the Internet mobile telephone, users can view Internet home pages made for Internet mobile telephones. Not only sites providing commercial services for Internet mobile telephones, but also home pages made by individuals for Internet mobile telephones can be viewed with the Internet mobile telephone.

A prescribed setup is required in order to send and receive Internet mail or view home pages with a personal computer, but the setup operation is complicated. In contrast, no difficult setup is necessary for the Internet mobile telephone, because it has an electronic mail address from the start and has an integrated browser for viewing home pages. It is a characteristic of the Internet mobile telephone that users can utilize the existing Internet mobile telephone services and, at the same time, freely view Internet home pages adapted to Internet mobile telephones.

The messaging service automatically sends registered users the information they desire from among the messaging services of various web sites. There are two message types, namely the message request type where prior registration is necessary, and the message free type that requires no registration. Both are automatically received as with normal electronic mail.

Internet mobile telephones are convenient in that the user can access various Internet information services without requiring a computer device such as a personal computer or PDA (Personal Data Assistance: mobile information terminal).

However, although the Internet mobile telephone allows access to various Internet information services, not all of the web server information can be used. Only contents made for Internet mobile telephones can be accessed, and, in contrast to the general Internet, there is a charge for much of these contents.

The methods of accessing Internet contents are listed below by the type of mobile telephone (including PHS). All of the services have in common that they are accessed in HTTP, but differ in the description of the information sent in HTTP.
(1) [i-Mode type] i-mode adapted HTML description
(2) [J-SkyWeb type] J-SkyWeb adapted HTML description
(3) [WAP/HDML type] HDML description
(4) [P-mail DX type] P-mail DX text description

The [i-Mode type] and the [J-SkyWeb type] can be described in HTML in the same way as normal web pages, but with limited types of tags that can be used with HTML. Therefore, web pages described for these types can also be viewed with browsers of normal personal computers. However, the [WAP/HDML type] and the [P-mail DX type] are similar to HTML in that tags are inserted in the text, but the description method used has a dedicated design for mobile telephone services.

In spite of these differences, the Internet mobile telephone is gaining wide use, and if access to all Internet contents were possible, the utility of the Internet mobile telephone would be extremely enhanced. Desirably, the cost of access should be held low, too (if possible, free). A technique that realizes these points is much desired.

Furthermore, acquiring information via the Internet conventionally required access to various servers for each of the desired information. When acquiring information periodically such as news, users had to access prescribed servers each time, but if the user forgot the operation, the information would be lost.

### SUMMARY OF THE INVENTION

It is an aim of the present invention to provide an information collection server, method, and recording medium that permits access to arbitrary Internet contents with a mobile terminal including the Internet mobile telephone, and allows acquisition of necessary information in a simple, reliable, and timely manner.

The information providing server according to the present invention comprises a collection conditions memory that pre-stores the conditions for collecting contents; an information collection portion that accesses servers and collects contents based on said collection conditions and distributes the collected contents to a mobile terminal; and a conversion portion that converts the collected contents into a format for said mobile terminal, wherein the information collection portion includes a synchronization portion for synchronizing contents between itself and said mobile terminal when contents are updated.

The information providing server according to the present invention comprises a retrieval conditions memory that pre-stores retrieval conditions; a search engine that acquires related server URLs based on said retrieval conditions; an information collection portion that accesses servers based on said collection conditions, collects the contents of said servers, and distributes the collected contents to a mobile terminal; and a conversion portion that converts the collected contents into a format for said mobile terminal, wherein said information collection portion contains a synchronization portion for synchronizing contents between itself and said mobile terminal when contents are updated.

The information providing server according to the present invention comprises a collection conditions memory that pre-stores the conditions for collecting contents; an information collection portion that accesses a server based on said collection conditions, collects the contents of said server, and distributes the collected contents to a mobile terminal; and a conversion portion that converts the collected contents into a format for said mobile terminal, wherein said information collection portion contains a synchronization portion for synchronizing contents between itself and said server when contents are updated.

The information collection method according to the present invention comprises the steps of setting collection conditions; collecting contents from a server based on said collection conditions; converting the collected contents into a format for a mobile terminal; synchronizing contents between an information collection server that collects contents and said mobile terminal; and transmitting contents based on a demand from said mobile terminal.

The information collection method according to the present invention comprises the steps of setting collection conditions; synchronizing contents between an information collection server that collects contents and a server having contents; according to the synchronization result, collecting contents from said server based on said collection conditions; converting the collected contents into a format for a mobile terminal; and transmitting contents to said mobile terminal.

The medium according to the present invention stores a program for causing a computer to execute the information collection method described above.

Medium includes flexible disks, hard disks, magnetic tapes, magneto-optical disks, CDs (including CD-ROM, Video-CD), DVDs (including DVD-Video, DVD-ROM, DVD-RAM), ROM cartridges, RAM memory cartridges with battery backup, flash memory cartridges, nonvolatile RAM cartridges, etc.

Also included are communications media such as cable communications media (e.g., telephone lines), and wireless communications media (e.g., microwave circuits).

Medium is defined as any kind of physical means for storing information (mainly digital data, programs), used for causing computers, dedicated processors and other processing apparatuses to perform certain functions. In other words, this may be any means for downloading programs onto a computer and for causing the computer to implement certain functions.

### BRIEF DESCRIPTION OF THE DRAWINGS

Fig. 1 is an overall block view of the system according to Embodiment 1;
Fig. 2 is a flowchart showing the operation of the system according to Embodiment 1;
Fig. 3 is a synchronization flowchart on the server side;
Fig. 4 is a synchronization flowchart on the client side;
Fig. 5 is an overall block view of the system according to Embodiment 2;
Fig. 6 is an overall block view of the system according to Embodiment 3;
Fig. 7 is a flowchart showing the operation of the system according to Embodiment 3; and
Fig. 8 is a flowchart showing the operation of the system according to Embodiment 4.

### DESCRIPTION OF THE PREFERRED EMBODIMENTS

### Embodiment 1.

Now, the system and method according to Embodiment 1 will be described with reference to the drawings.

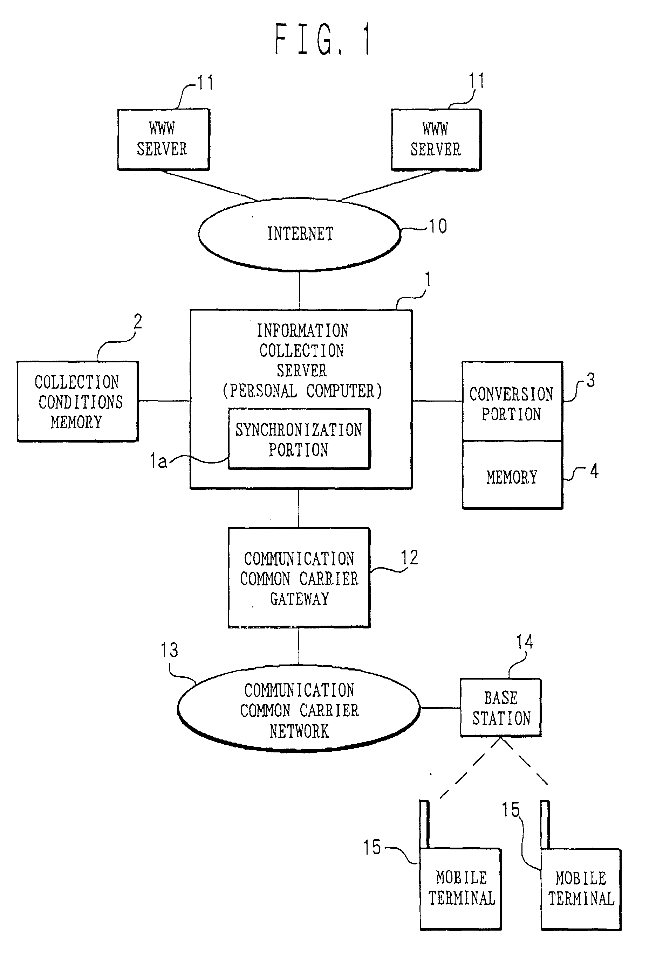

Fig. 1 is an overall block view of the present system. The device according to Embodiment 1 of the present invention comprises an information collection server 1 for accessing a WWW server 11 based on prescribed conditions, collecting contents, and distributing the collected contents to a mobile terminal 15, a collection conditions memory 2 for storing the conditions for collecting contents, a conversion unit 3 for converting the collected contents to a format for mobile terminal 15 as necessary, and a memory 4 for storing the collected contents. Information collection server 1 includes a synchronization portion 1a for synchronization of the contents between server 1 and mobile terminal 15, i.e., for reflecting any change or deletion of the contents of either side on the other side. By using synchronization portion 1a, mobile terminal 15 can receive the latest contents collected by information collection server 1, and by deleting any of the contents with mobile terminal 15, the corresponding contents in memory 4 of information collection server 1 can also be deleted. In this way, according to the system and method of Embodiment 1 of the present invention, information collection and distribution is performed in a timely manner.

As shown in Fig. 1, information collection server 1 can access WWW server 11 via the Internet 10, which is not limited to the Internet and may be any other computer network. Information collection server 1 is also connectable to a communication common carrier gateway 12, and can send data to, and receive data from, mobile terminal 15 via a network 13 of the communication common carrier and the base station 14 thereof. The Internet mobile telephone is a typical example of mobile terminal 15.

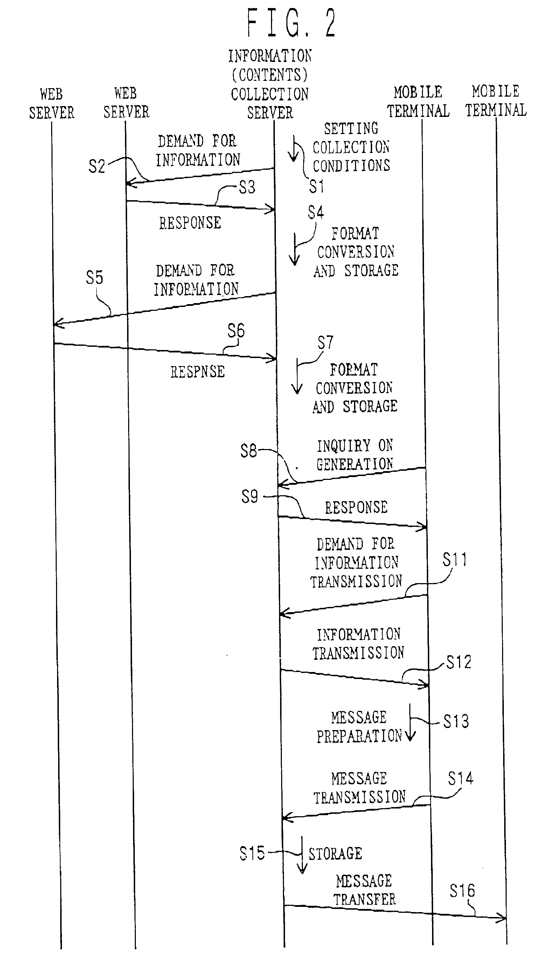

Next, the operation of the system and method of Embodiment 1 will be explained with reference to the flowchart in Fig. 2.

First, the user fixes the collection conditions and stores the fixed conditions in memory 2 (S1). The user can set the collection conditions by using a keyboard (not illustrated) from server 1, or from mobile terminal 15. Some of the collection conditions that can be fixed are a URL, keyword, date and time.

Based on the fixed collection conditions, server 1 accesses an arbitrary web server 11 and collects information (contents) (S2, S3). The collected information may be either or both of text and image.

The format of the collected information is converted into the format for the mobile terminal, and the information before or after conversion is stored in memory 4 (S4). In most cases, the format of the collected information is HTML. This is converted for example into the following formats.
(1) [i-Mode type] i-mode adapted HTML description
(2) [J-SkyWeb type] J-SkyWeb adapted HTML description
(3) [WAP/HDML type] HDML description
(4) [P-mail DX type] P-mail DX text description

The [i-Mode type] and the [J-Skyweb type] can be described in the same way as normal web pages, but with limited types of tags that can be used with HTML. Therefore, web pages described for these types can be viewed on browsers of normal personal computers. However, the [WAP/HDML type] and the [P-mail DX type] are similar to HTML in that tags are inserted in the text, but uses description methods with dedicated design for mobile telephone services.

When information is acquired from one web server, a different web server is accessed and the same process is repeated (S5 - S7). This process is repeated for all of the fixed collection conditions.

Mobile terminal 15 accesses information server 1 and makes an inquiry regarding the generation thereof (S8). The generation is a parameter used for synchronization of the contents between server 1 and mobile terminal 15. This will be described later in detail. Furthermore, the inquiry regarding the generation at S8 is possible at an arbitrary timing, whether before, during or after the acquisition of information by information collection server 1 from a web server.

Information collection server 1 gives a response on the generation to mobile terminal 15 (59). Mobile terminal 15 receives the response, requests the transmission of information as necessary (S11), and receives the necessary information (S12). The processes S8 to S12 allow synchronization of the contents between information collection server 1 and the mobile terminal. These processes are quasi synchronization protocols. These synchronization processes may be applied to other processes between information collection server 1 and mobile terminal 15, for example the message transmission and transfer processes as explained below.

When a message is exchanged between multiple mobile terminals 15, the processes S13 to S15 in Fig. 2 are performed. The transmitting mobile terminal 15 prepares the message (S13) and transmits it to information collection server 1 (S14). Information collection server 1 stores the message in memory and transfers the message to the receiving mobile terminal 15.

By synchronizing contents and/or messages, the contents and/or messages on the screen of the terminal can be sequentially updated. Thereby, a kind of private portal site is provided.

Now, the procedures of fixing the collection conditions, collecting information and distributing information will be described in detail below.

Fixing the collection conditions is performed at the mobile terminal by specifying the information to be acquired, the timing for acquiring such information, and the destination for sending the acquired information, and then communicating the specified data to be acquired together with the data indicating timing and destination to the information collection server via a communication network. Information collection and distribution is performed at the information collection server by acquiring the information to be acquired at the specified timing based on the communicated data, and then sending the information to the specified destination. In other words, the information collection server, based on the data indicating said information to be acquired, accesses another server via the communication network and acquires the information to be acquired from said other server.

Data indicating the information to be acquired may contain a URL (Universal Resource Locator) and a portion of the HTML (Hypertext Markup Language) source of the home page specified by such URL. Furthermore, the data indicating the information to be acquired may contain an HTML source tag, and the transmitting server may acquire information sectioned based on said tag. The data may also contain at least one of the date and the time of such HTML source, and, based on this information, the transmitting server may acquire sectioned information. The data may also include a predetermined character string within the HTML source, and the server may acquire sectioned information based on such character string.

This will be described in detail below.

First, the user operates an input device (not illustrated) of one mobile terminal 15, accesses server 1, and acquires an HTML (Hypertext Markup Language) file for designation of the conditions. A WWW browser (not illustrated) incorporated in mobile terminal 15 interprets such HTML file sent from server 1 and displays the result on the screen. At this time, the HTML file may be sent to the terminal after the user has sent a user name and a password.

By inputting a desired character string in this image, a URL (Universal Resource Locator), a retrieval method, a key (head keyword, tail keyword, and sequence), and the maximum length of the character string to be transmitted to the mobile terminal (maximum character string length) can be designated. Concrete examples will be described later. Concerning the maximum character string length, a predetermined value is set as the character string that can be displayed is limited by a pager.

When selecting a URL, alphabet letters may be input directly, a URL used in the past may be selected, or a URL prepared in advance by the server can be selected. If the user-designated URL can be viewed, but copying or transferring is prohibited by the server according to the present invention, an error message indicating such prohibit may be displayed, urging the user to input a different URL. If the designated URL is for registered users only, the server may automatically send a mail to the administrator and use such URL after gaining permission.

After the user has made certain operations, the displayed retrieval conditions, URL, user name, etc. are sent from mobile terminal 15 to server 1. Then, server 1 access other WWW servers 11, 11 via the Internet 10 according to the given retrieval conditions and URL, and acquires character strings matching the retrieval conditions, etc., from either of the servers as an HTML file. The acquired character string is then communicated to mobile terminal 15.

Additional parameters that can be designated at server 1 are the device type and number of the mobile terminal to which information should be sent, any password that is necessary, the acquired character string (transmission message), and a mail address for sending any necessary transmission report.

A possible collection condition is the collection in certain time intervals (e.g., every n minutes. n=1, 5, 10, 15, 30, 45, 60, 90, 120...). In this case, information collection is executed when the date and time of the schedule file substantially matches with the current time (e.g., if the existence of a job is checked in intervals of 60 minutes, when there is a schedule that should have been executed within the past 30 minutes or that should be executed within the next 30 minutes).

Furthermore, if for example <title>, </title> is set as a collection retrieval condition, data regarding the title of the home page can be acquired. Similarly, by designating <BR>, the data up to line feed (to the end of the character string) is acquired, by designating "%02m%02d" (denoting that month data of two digits and day data of two digits are designated), the date information is acquired, by designating "&time," the time information is acquired, by designating character strings "aa" to "bb," the data between "aa" and "bb" is acquired. In this case, when there is a plurality of matching portions, it is possible to designate which portion should be acquired. It is also possible to make a designation to acquire data starting from a certain character in a certain line to a certain character in another line. Users with little experience in handling HTML sources may designate conditions directly viewing the displayed home page. In such case, the user terminal or the WWW server unit may include software for converting the home page display designation to HTML source designation.

According to this embodiment, it is possible to provide stock prices, stock exchange information, weather information, election reports, etc. Conventionally, this type of service required a dedicated server and dedicated terminal, but according to this embodiment of the present invention, a general purpose server and a portable wireless terminal can be used.

Furthermore, if access to a home page is charged (e.g., as-used based on the time), it is possible to reduce the cost of receiving information by accessing intermittently. Further cost reduction is possible by limiting the access time interval. For example, if the user desires to know the latest baseball news, access is limited to the interval from 6 to 10 o'clock during which baseball is played, and if stock price information is desired, access is limited to the interval during which the stock market is opened.

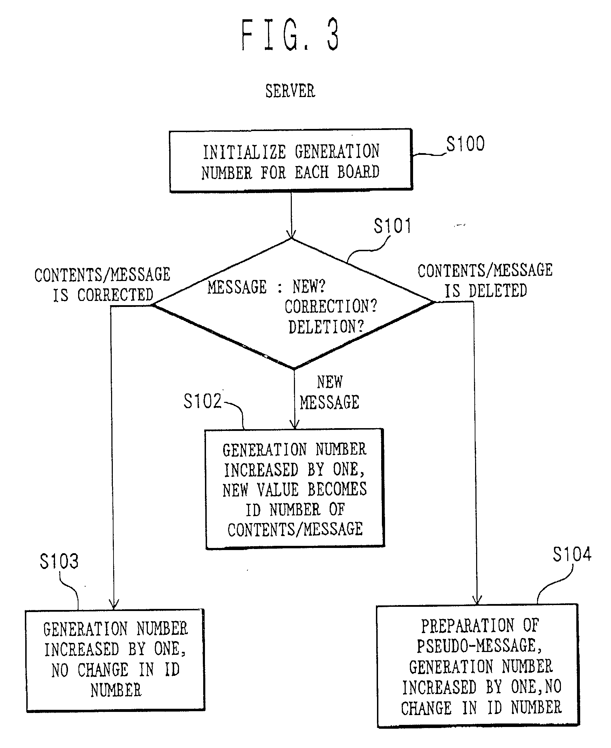

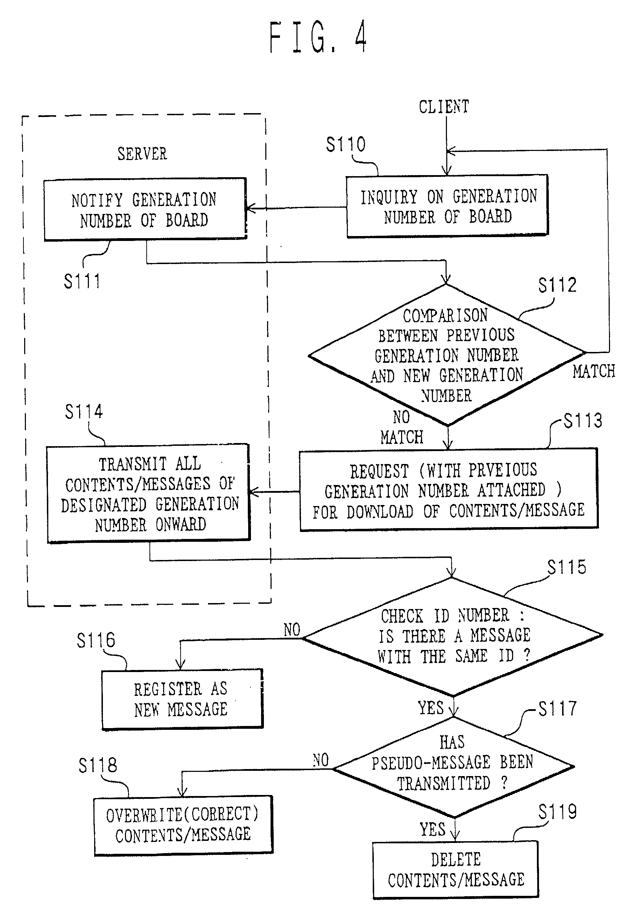

Next, the concrete synchronization procedures will be described with reference to Figs. 3 and 4. In this embodiment, only the updated contents/messages are transmitted from the server to the client, using the difference contents/message transmission method.

First, the processing by the server will be explained based on Fig. 3.

The server (servlet) saves for each board (area for writing contents/messages - e.g., a board prepared for each mobile terminal) a number called a generation number. Each of the contents/messages has an ID number and a generation number. The generation number is initialized to "0" when the board is made (S100), and is changed (+1) every time a change is made to the board (S102 to S104).

When new contents/messages are posted, the generation number of the board is increased by one, and this new generation number becomes the ID number and the generation number of the contents/message (S102).

When contents/messages are corrected, the generation number of the board is increased by one, and this becomes the new generation number of such contents/messages. The ID number of the contents/message remains unchanged (S103).

According to the above procedures, all contents/messages on a certain board hold a unique ID number and generation number. The server saves index information of the contents/messages based on the ID number and generation number of such contents/messages.

When contents/messages are deleted, the server prepares "pseudo-contents/message" expressing deletion instead of such contents/message, and performs the same processing as for the contents/message correction described above (S104). The pseudo-contents/message only has an ID number and a generation number.

Now, the processing by the mobile terminal (client) will be described based on Fig. 4.

The client makes a periodical inquiry (e.g., once every five to thirty seconds) to the server regarding the current board generation number (S110). The client compares the current generation number with the previous generation number (S112), and only when a different number is obtained, the client makes a request (with the previous generation number attached to such request) to download the contents/message of such generation number onward (S113).

Upon receiving such request, the server uses the index information to send all contents/messages for the designated generation number onward including any pseudo-contents/message to the client (S114).

The client confirms the ID number of the sent contents/messages (S115), overwrites contents/messages if the ID number is the same (S118: correction processing), and if not, treats such contents/message as new (S116). If pseudo contents/messages are sent (S117), the contents/message with the same ID number is deleted (S119).

According to the above processing, the server and all clients can hold the same information when new contents/messages are posted, corrected or deleted on a board.

As described above, according to this embodiment of the present invention, desired information is acquired from a WWW server and converted into the format for a mobile terminal, and the contents are synchronized between the mobile terminal and the server, thereby allowing access of a mobile terminal (including the Internet mobile telephone) to arbitrary Internet contents so that necessary information can be acquired in a simple and reliable manner.

### Embodiment 2.

In Embodiment 1 of the present invention, information collection server 1 collects the contents of a URL that is predetermined according to the conditions set in collection conditions memory 2. However, it is also possible to provide a search engine instead of, or in addition to, the set conditions, thereby collecting contents by automatically searching WWW servers matching the search conditions.

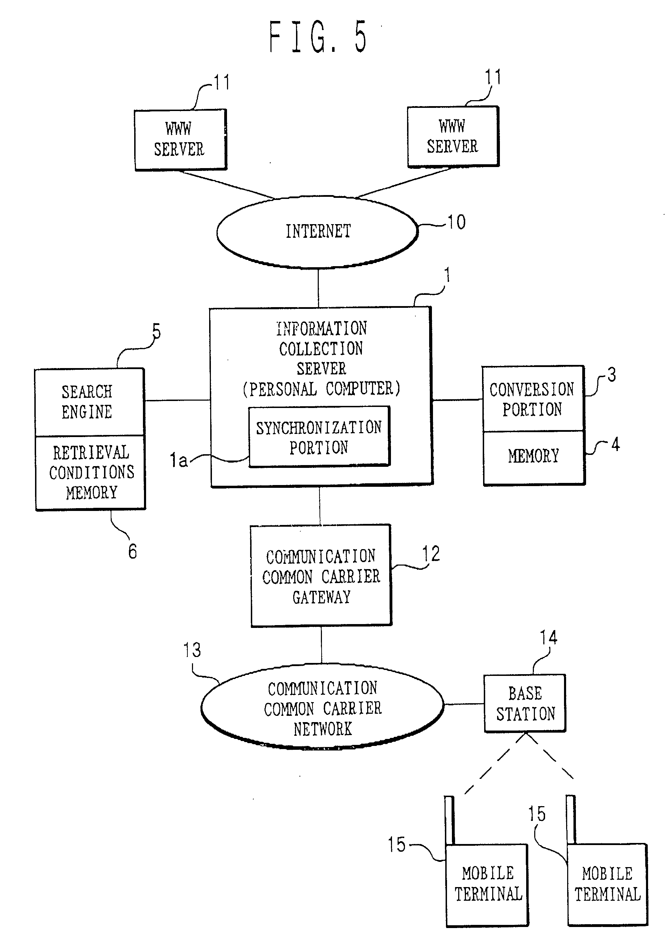

A block view of the system according to Embodiment 2 of the present invention is shown in Fig. 5. The user sets the search conditions in advance in memory 6. Search engine 5 is automatically started when information collection server 1 collects information, and the search engine searches WWW servers in accordance with the search conditions in memory 6 and outputs the result to information collection server 1. Information collection server 1 accesses the searched WWW servers and collects the pre-designated information.

Depending on the search conditions, the output number of search results may be very large. In such case, it is possible to select a portion thereof to collect information. For example, it is possible to collect only information of the upper ranks of the list, or information that highly matches the search conditions (have high similarity with the search conditions), or that has been recently updated.

The explanation of the other operations will be omitted as they are the same as in Embodiment 1.

### Embodiment 3.

In the system/method according to the present invention described above, it is possible to include an image in the contents/message. The system/method therefor will be described below.

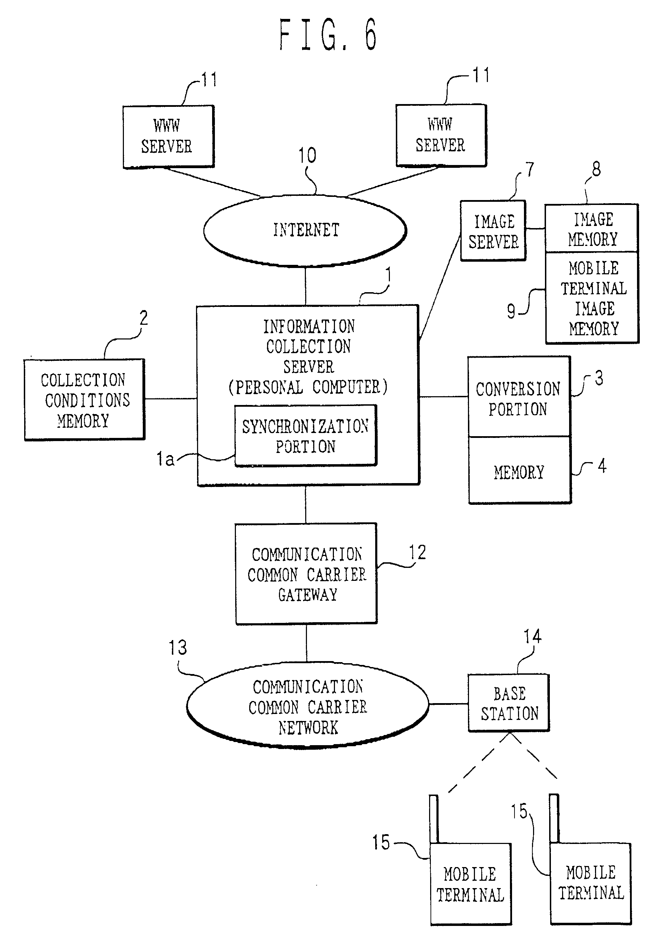

Fig. 6 is a block view of the system relating to Embodiment 3 of the present invention. Fig. 6 corresponds to Fig. 1, and additionally has an image server 7, an image memory 8 connected thereto, and a memory 9 for storing images for the mobile terminal. Image server 7 receives image data alone or together with contents/messages from WWW server 11 and/or mobile terminal 15, and stores such data in image memory 8. Image server 7 converts the received image data to an image for the mobile terminal and stores the converted data in memory 9 for the mobile terminal.

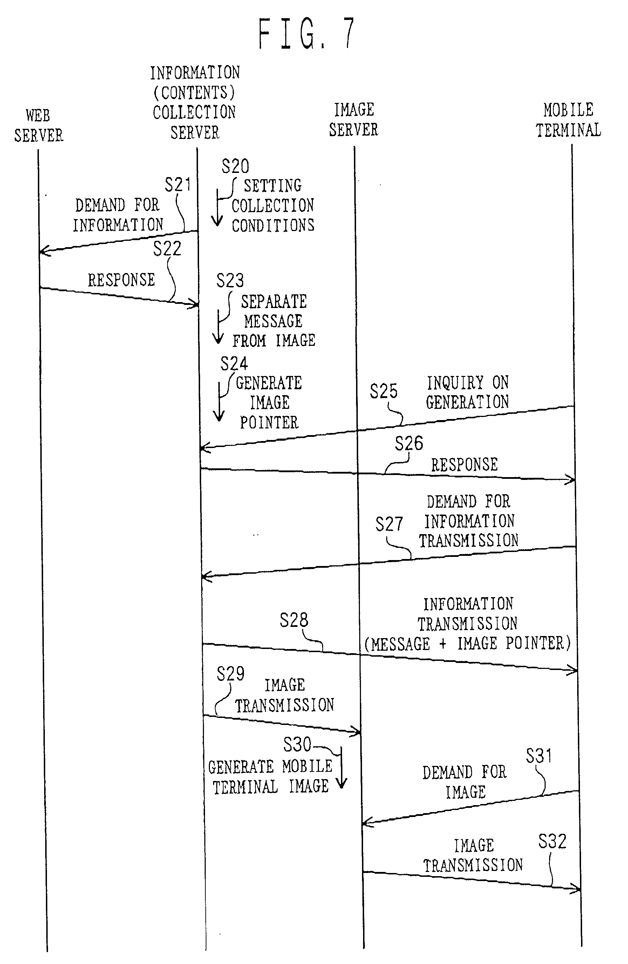

The processing flow of the system/method relating to Embodiment 3 will be described using the flowchart in Fig. 7.

The user sets the collection conditions and stores the set conditions in memory 2 (320). The user can set the collection conditions by using a keyboard (not illustrated) from server 1, or from mobile terminal 15. Some of the collection conditions that can be set are a URL, keyword, date and time.

Based on the set collection conditions, server 1 accesses an arbitrary web server 11 and collects information (contents) (S21, S22). The collected information may be either or both of text and image.

The message and image data are sent from web server 11 to information collection server 1 (S22). Server 1 separates the message from the image data (S23). In the present embodiment, not only the message is sent to each mobile terminal, but also a pointer showing the network location of the image data and/or the image for a mobile terminal (e.g., a URL). In other words, a pointer of the image is generated (S24), and the message and the image pointer are sent to mobile terminal 15 (S28). The image data is predetermined to be stored in image server 7, so the pointer is a URL of image server 7. The image data is specified by the sender's name, address, title, etc., so the URL includes the sender's name, address, title, etc. The image pointer includes such information as the storage locations of the original image, the image for an icon, and the image for a mobile terminal. Not all of such information is always sent. For example, only the storage location of the image for a mobile telephone may be sent to a mobile telephone.

Processing steps S25 to S28 are for synchronization. The explanation of this process will be omitted as it is the same as for Embodiment 1.

Image data is sent from information collection server 1 to image server 7 (S29). Image server 7 stores the received image data in image memory 8, generates image data for a mobile terminal from the received image data (S30), and stores the generated data in mobile terminal image memory 9. The icon image data is incorporated in a message icon 40 as shown in Fig. 7. The image data for a mobile terminal is generally smaller than the original image. Therefore, the data size is reduced similarly as in the case of an icon. The size (number of pixels) of the mobile terminal image data is set depending on the display capability of the mobile terminal screen. The image color data is compressed based on the color display capability of the mobile terminal screen. For example, if the mobile terminal screen is a monochrome type, no color information is needed.

When a message and an image pointer are sent to mobile terminal 15 (S28), mobile terminal 15 sends a demand to image server 7 for the image for a mobile terminal (S31). Image server 7 sends the mobile terminal image to mobile terminal 15 (S32). Mobile terminal 15 displays the received image on its screen.

According to the system/method of Embodiment 3 of the present invention, an image can be communicated together with the message. An image optimized to the display capability of the receiving mobile terminal can be sent, so the image can be displayed adequately on the receiving mobile terminal. Furthermore, as the image is not sent together with the message, the user can select whether or not to receive the image with the mobile terminal, thereby omitting redundant data reception. It is also possible to receive the original image data with the mobile terminal. Furthermore, although image data for a mobile terminal was used in the above description, Embodiment 3 of the present invention is not limited thereto, and is also applicable to image data for an icon.

### Embodiment 4.

In Embodiment 1, contents/messages were synchronized between the information collection server and the mobile terminal. However, it is also possible to synchronize contents between the web server and the information collection server, or among the web server, the information collection server, and the mobile terminal.

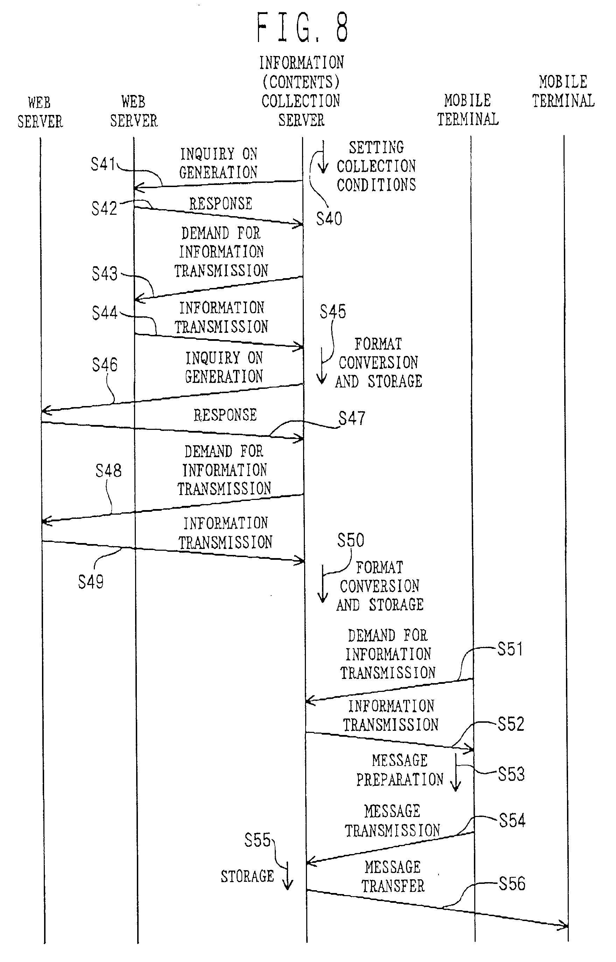

Fig. 8 is a flowchart of Embodiment 4 of the present invention, showing the synchronization procedures between the information collection server and the web server (S41 to S44, S46 to S49). A detailed explanation will be omitted, as the procedures are similar to that in Figs. 3 and 4. Furthermore, these synchronization procedures can also be applied to the information transmission (S51, S52) and message communication (S53 to S56) procedures between the information collection server and the mobile terminal.

According to Embodiment 4 of the present invention, synchronization is performed between the web server and the information collection server, so any change in the web server contents can be immediately reflected in the information collection server.

The present invention is not limited to the embodiments above and includes various alterations within the scope defined in the claims, which are included in the scope of the present invention.

Furthermore, means as referred to herein do not always mean physical means but include cases where the functions of each means are realized through software. Furthermore, the functions of one means may be realized through two or more physical means, or the functions of two or more means may be realized through one physical means.

## Claims

1. An in format ion collection server comprising:
a collection conditions memory that pre-stores the conditions for collecting contents;
an information collection portion that accesses servers based on said collection conditions, collects the contents of said servers, and distributes the collected contents to a mobile terminal; and
a conversion portion that converts the collected contents into a format for said mobile terminal,
wherein said information collection portion contains a synchronization portion for synchronizing contents between itself and said mobile terminal every time contents are updated.

2. An information collection server according to claim 1, further comprising:
an image memory that stores image data;
a mobile terminal image memory that stores image data for said mobile terminal; and
an image server that receives image data from said server and/or said mobile terminal and stores the received data in said image memory, converts said image data into an image for said mobile terminal, and stores the converted data in said mobile terminal image memory,
wherein said information collection portion generates a pointer of said image data and/or said mobile terminal image data, and transmits the generated pointer to said mobile terminal.

3. An information collection server according to claim 2, wherein, in response to a demand from said mobile terminal, said information collection portion retrieves said image memory and/or said mobile terminal image memory based on said pointer, and transmits said image data and/or mobile terminal image data to said mobile terminal.

4. An information collection server according to claim 2, wherein said pointer includes at least one of information showing the storage location of the original image and information showing the storage location of the image for a mobile terminal.

5. An information collection server according to claim 1, wherein said synchronization portion sets a generation number showing the state of contents and/or message, and updates said generation number at least in one of the cases of said information collection portion receiving new contents and/or messages, the contents and/or message in said information collection portion being corrected, and the contents and/or message in said information collection portion being deleted, and wherein said mobile terminal receives said generation number, and when the received generation number differs from the previously received generation number, sends a demand to said synchronization portion for transfer of contents and/or message.

6. An information collection server according to claim 5, wherein said contents/message includes an ID number as its attribute, and
when said information collection portion receives a new message, the updated generation number is set as said ID number,
when the contents and/or message of said information collection portion is corrected, said ID number is not updated, and
when the contents and/or message of said information collection portion is deleted, said ID number is not updated, but the contents and/or message is overwritten by a pseudo-message.

7. An information collection server according to claim 6, wherein, if, upon receiving the transfer of contents and/or message from said synchronization portion of said information collection portion, the mobile terminal:
does not hold any contents and/or message having the same ID number as that of the transferred contents and/or message, the mobile terminal registers the contents and/or message having such ID number as new contents and/or messages,
holds contents and/or message having the same ID number as that of the transferred contents and/or message, the mobile terminal corrects its own contents and/or message having such ID number by rewriting it with the contents and/or message newly acquired from the server, and,
holds contents and/or message having the same ID number as that of the transferred contents and/or message, and if the contents and/or message gained from the server is a pseudo-message, the mobile terminal deletes its own contents and/or message having such ID number.

8. An information collection server according to claim 5, wherein said synchronization portion notifies said generation number in predetermined time intervals.

9. An information collection server according to claim 1, wherein said collection conditions include at least a URL (Universal Resource Locator) and a portion of the HTML (Hypertext Markup Language) source of the home page specified by said URL.

10. An information collection server according to claim 1, wherein said collection conditions include HTML source tags, and said information collection portion cuts out and acquires information based on said tags.

11. An information collection server according to claim 1, wherein said collection conditions include at least one of the date and time information of the HTML source, and, based on such information, said information collection portion cuts out and acquires information.

12. An information collection server according to claim 1, wherein said collection conditions include predetermined character strings within the HTML source, and said information collection portion cuts out and acquires information based on said character string.

13. An information collection server comprising:
a retrieval conditions memory that pre-stores retrieval conditions;
a search engine that acquires related server URLs based on said retrieval conditions;
an information collection portion that accesses servers based on the retrieval results of said search engine, collects the contents of said servers, and distributes the collected contents to a mobile terminal; and
a conversion portion that converts the collected contents into a format for said mobile terminal,
wherein said information collection portion contains a synchronization portion for synchronizing contents between itself and said mobile terminal when contents are updated.

14. An information collection server comprising:
a collection conditions memory that pre-stores the conditions for collecting contents;
an information collection portion that accesses a server based on said collection conditions, collects the contents of said server, and distributes the collected contents to a mobile terminal; and
a conversion portion that converts the collected contents into a format for said mobile terminal,
wherein said information collection portion contains a synchronization portion for synchronizing contents between itself and said server when contents are updated.

15. An information collection server comprising:
a collection conditions memory that pre-stores the conditions for collecting contents;
an information collection portion that accesses a server based on said collection conditions, collects the contents of said server, and distributes the collected contents to a mobile terminal; and
a conversion portion that converts the collected contents into a format for said mobile terminal,
wherein said information collection portion contains a synchronization portion for synchronizing contents between said server and said mobile terminal when contents are updated.

16. An information collection method comprising the steps of:
setting collection conditions;
collecting contents from a server based on said collection conditions;
converting the collected contents into a format for a mobile terminal;
synchronizing contents between an information collection server that collects contents and said mobile terminal; and
transmitting contents based on a demand from said mobile terminal.

17. An information collection method according to claim 16, wherein said synchronization step includes the steps of:
sending an inquiry on the generation number that shows the state of contents;
comparing the acquired generation number with the previous generation number; and
sending a demand for transmission of contents based on the comparison result.

18. An information collection method according to claim 17, wherein said contents include an ID number as their attribute, the method further comprising the steps of:
determining whether the ID number included in the received contents matches with the ID number of already held contents;
if there are no contents corresponding to the received ID number, registering the contents of said ID number as new contents;
if there are contents corresponding to the received ID number, correcting the contents by overwriting the contents of said ID number with the newly gained contents; and
if there are contents corresponding to the received ID number, and the gained contents are pseudo-contents, deleting the contents of said ID number.

19. An information collection method according to claim 16, wherein said step of transmitting contents further comprises the steps of:
if said contents includes image data, generating a pointer of said image data;
transmitting said pointer;
sending a demand for said image data based on said pointer; and
incorporating said image data in said contents.

20. An information collection method comprising the steps of:
setting collection conditions;
synchronizing contents between an information collection server that collects contents and a server having contents;
according to the synchronization result, collecting contents from said server based on said collection conditions;
converting the collected contents into a format for a mobile terminal; and
transmitting contents to said mobile terminal.

21. A medium storing a program for causing a computer to execute an information collection method comprising the steps of:
setting collection conditions;
collecting contents from a server based on said collection conditions;
converting the collected contents into a format for a mobile terminal;
synchronizing contents between an information collection server that collects contents and said mobile terminal; and
transmitting contents based on a demand from said mobile terminal.

22. A medium storing a program for causing a computer to execute an information collection method comprising the steps of:
setting collection conditions;
synchronizing contents between an information collection server that collects contents and a server having contents;
according to the synchronization result, collecting contents from said server based on said collection conditions;
converting the collected contents into a format for a mobile terminal; and
transmitting contents to said mobile terminal.

23. A program for causing a computer to execute an information collection method comprising the steps of:
setting collection conditions;
collecting contents from a server based on said collection conditions;
converting the collected contents into a format for a mobile terminal;
synchronizing contents between an information collection server that collects contents and said mobile terminal; and
transmitting contents based on a demand from said mobile terminal.

24. A program for causing a computer to execute an information collection method comprising the steps of:
setting collection conditions;
synchronizing contents between an information collection server that collects contents and a server having contents;
according to the synchronization result, collecting contents from said server based on said collection conditions;
converting the collected contents into a format for a mobile terminal; and
transmitting contents to said mobile terminal.
